# EUROPEAN PATENT SPECIFICATION

(11) **EP 1 885 800 B1**
(45) Date of publication and mention of the grant of the patent: **24.12.2008**
(21) Application number: 06821732.2
(22) Date of filing: 12.10.2006
(51) Int. Cl.: C08L 63/10

(54) **POLYMERIC COMPOSITE MATERIAL FOR COLD MOULDING AND A PROCESS FOR OBTAINING IT**
POLYMERVERBUNDWERKSTOFF FÜR KALTPRESSEN UND VERFAHREN ZU DESSEN HERSTELLUNG
MATÉRIAU COMPOSITE POLYMÈRE POUR MOULAGE À FROID ET PROCÉDÉ D'OBTENTION DE CELUI-CI

(43) Date of publication of application: 13.02.2008
(73) Proprietor: Real Estate Service S.r.l., 21047 Saronno (VA) (IT)
(72) Inventor: RANDIS, Filippo, 22070 Beregazzo Con Figliaro (Como-Italy) (IT)
(74) Representative: Long, Giorgio
(86) International application number: PCT/IT2006/000728
(87) International publication number: WO 2007/132493

(56) References cited:
- WO-A-94/04583
- WO-A-99/30329

## Description

The present invention relates to a plastic composite material for cold moulding and a process for obtaining it.

The use of plastic resins, such as polyester resins for obtaining high-performing materials is well known. A typical example is the so-called polymeric compounds, i.e. those materials deriving from the combination of two matrixes of different origins and with different characteristics, which when suitably combined with each other, form a material that maintains, at least partially, the characteristics of the matrixes of which it is composed. Most used materials include polyesters reinforced with glass fibers (Fiberglass^{™}) or with polymeric materials or with a woven fabric, such as to give a multi-directional resistance thereto. Also known are vinyl ester resins, which due to their structure, have a good affinity with glass fibers. However, vinyl ester resins, despite their good resistance to chemical agents are not recommended for use in high-temperature applications.

The high performance of plastic materials such as polypropylene is also known. The drawback of these materials is, however, related to the moulding process, which involves hot-moulding operations being carried out in expensive steel moulds, and with high tonnage presses.

The object of the present invention is to provide a high-performing material, which is particularly provided with a considerable break resistance, asepticity, hydrophobicity, resistance to acids, high characteristics of acoustic and heat insulation, and the like, and which can be obtained by means of a simple and cost-effective process.

This object is achieved by a polymeric compound and a process for obtaining the same, such as defined in the annexed claims.

Further features and advantages of the composite material being the object of the present invention will be better understood from the description of some exemplary embodiments thereof, which is given herein below by way of non-limiting illustration, with reference to the figures:

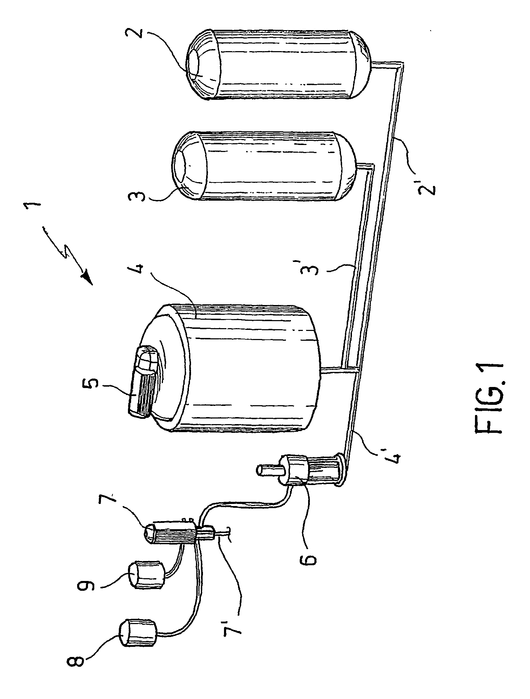

Fig. 1 is a schematic perspective view of a plant for preparing the composite material of the invention.

The composite material according to the invention consists of a vinylester resin, in which a filler being a polyolefin, preferably selected from polypropylene and polyethylene, is admixed. More preferably, this polyolefin is polyethylene.

The vinylester resin is preferably an epoxy vinylester resin based on a bisphenol-A epoxy resin cross-linked with styrene in a styrene percentage ranging between 30% and 50% by weight, preferably 35% to 45% by weight. This vinylester resin preferably has a density of more than 1 g/cc, more preferably ranging between 1.1 and 1.2 g/cc and a glass transition temperature ranging between 110°C and 130°C.

In a preferred embodiment, the polyolefin is in a micronized form and has a grain size ranging between 20 µm and 50 µm, more preferably between 22 µm and 30 µm. Among the possible shapes of micronized particles, the spheroid shape is preferred.

In the composite material of the invention, the polyolefin is preferably admixed in an amount less than 55% by weight, more preferably between 35% and 50% by weight, most preferably about 40% by weight of the vinylester resin. It has been surprisingly observed that the polyolefin is capable of providing the polymeric compound with high characteristics of mechanical and acid resistance; with polyethylene, particularly, a higher performance is obtained than with polypropylene, which is more commonly used as a filler in similar prior art applications.

The composite material of the invention will further contain a cross-linking catalyst and a primer, as will be better discussed herein below.

The polymeric compound of the invention may further contain a suitable pigment or colouring agent, such as to provide the same with the desired aesthetic appearance.

The process for preparing the polymeric composite material in accordance with the invention will be now described with the aid of Fig. 1, which schematically shows a system 1 to be used for this process.

The system 1 consists of a first reservoir 2 for the vinylester resin (resin + styrenic crosslinker) and a second reservoir 3 for the polyolefin. These reservoirs 2, 3 are communicated, through respective tubes 2', 3', with the bottom of a chamber 4 provided with a stirrer, in which vacuum is created by means of suitable air-exhausting means 5. The bottom of the chamber 4 is also in fluid communication, through a tube 4', with pump means 6 that provide to feed the material mixture to mixing means 7, typically a dynamic mixer. The catalyst and the pigment or colouring agent, which are contained in respective reservoirs 8, 9, are also fed to the mixing means 7. By means of a tube 7', the mixing means 7 feed the reactant mixture directly to a mould (not shown), where the composite material is formed. Suitable valves and a command and control unit provide to control the material flows in accordance with the modalities of the process which will be described herein below.

Practically, the vinylester resin and the polyolefin are loaded, in the ratios indicated above, to the chamber 4 and are subjected to vacuum treatment (5 bar depression) under stirring for more than 2 hours, preferably more than 3 hours, most preferably about 4 hours. The vacuum treatment is very important for preventing the generation of bubbles during the crosslinking reaction. Thereby, the final characteristics of the composite are improved.

When this treatment has been completed, the mixture is transferred, by means of the pump means 6, to the mixing means 7, where it is added with the suitable amount of catalyst/primer and colouring agent or pigment. At the end of the addition, the reactant mixture is poured in the mould, where the crosslinking reaction and the consequent formation of the polymeric composite material will be completed. The reaction is exothermic, such that temperatures of 70-80°C can be reached, and is normally completed in a rather short time (a few minutes). It is important to obtain a proper mixing of all the components provided in the mixing means 7, particularly the resin and polyethylene in order to obtain an homogeneous composite material.

The colouring agent or pigment is mixed with the other components in a weight ratio ranging between 1% and 3%, preferably about 2% by weight.

The catalyst is admixed with the other components in a weight ratio ranging between 1% and 3%, preferably between 1.5% and 2% by weight. As the catalyst, a peroxide such as acetyl acetone peroxide or methyl ethyl ketone peroxide is normally used. Preferably, a suitable primer/accelerator will be also used, particularly a cobalt salt, preferably Co octanoate, in a ratio ranging between 6% and 12% by weight. The accelerator ratio can be changed according to the type of product desired to be produced, and the concentration thereof depends on the thickness of the product and time required for curing. When the thickness values are relatively thin, it has been found advantageous to use a concentration ranging between 2% and 3%, and preferably about 2,5% relative to the resin weight. In the case of very thick products, in which releasing the heat generated by the hardening reaction may result to be difficult, the use has been found advantageous of a catalyst formed by methyl ethyl ketone peroxide with weight ratios ranging between 0,5% and 5%, and particularly between 1% and 4% of the resin, with the aid of an accelerator formed by Co salts in a ratio ranging between 2% and 3%, and preferably about 2.5% by weight of the resin.

When desiring to manufacture light-coloured or transparent products, instead of Co salts as the accelerators, the use of N,N-diethylacetoacetamide is preferred in a concentration ranging between 0.05% and 0.4%, and preferably between 0.1% and 0.4% by weigh of the resin.

The polymeric composite material according to the invention is provided with such characteristics as to be used for high-performing applications. It is characterized, in fact, by high mechanical resistance and resistance to corrosive elements, it is aseptic, water-repellent, unscratchable and can be easily moulded, milled, threaded or tapped. Accordingly, a typical application field for this material is furniture elements, and particularly kitchen worktops, and most particularly, counters in technical laboratories. For example, a surface can be moulded with a sink being integrally modelled therein.

It has been surprisingly observed that the polymeric compound of the invention has considerable heat insulation characteristics. This characteristic is surprising, in that the vinylester resin is normally not recommended for high temperature applications. Due to this characteristic, the inventive material may be effectively used for manufacturing heat-insulating panels.

The inventive material also has considerable sound insulating characteristics and can be thus advantageously employed for manufacturing hi-fi speakers.

Due to the hydrophobicity and mechanical-chemical resistance, the inventive material can be efficiently used for manufacturing pots for flowers and plants.

A last, non-negligible advantage of the inventive material is its low cost, which is also a result of the simple manufacturing process thereof, which does not require using steel moulds for high-temperature injection and high tonnage presses.

It will be appreciated that only some particular embodiments of the polymeric composite material being the object of the present invention and of the process for obtaining it have been described herein, to which those skilled in the art will be able to make any and all modifications required for adapting the same to specific applications, without however departing from the scope of protection of the present invention.

For example, it may be possible to further improve the performance of the composite material of the invention, by including therein, for example during the step of moulding, fibers or woven fibers of different materials, such as glass fibers, within the moulds.

## Claims

1. A polymeric composite material comprising an epoxy vinylester resin in which a filler is dispersed, said filler being a polyolefin in particulate form, wherein said polyolefin is mixed in an amount less than 55% by weight relative to the epoxy vinylester resin.

2. The polymeric composite material according to claim 1, wherein said polyolefin is mixed in an amount ranging between 35% and 50% by weight, preferably about 40% by weight, relative to the epoxy vinylester resin.

3. The polymeric composite material according to claim 1 or 2, wherein said polyolefin is used in a spheroid particulate form.

4. The polymeric composite material according to claim 3, wherein said polyolefin is micronized and has a grain size ranging between 20 µm and 50 µm.

5. The polymeric composite material according to claim 4, wherein said polyolefin has a grain size ranging between 22 µm and 30 µm.

6. The polymeric composite material according to any claim 1 to 5, wherein said polyolefin is selected from polypropylene and polyethylene, preferably polyethylene.

7. The polymeric composite material according to any claim 1 to 6, wherein said epoxy vinylester resin is based on an epoxy resin of bisphenol-A crosslinked with styrene in a styrene percentage between 30% and 50% by weight, preferably between 35% and 45% by weight.

8. The polymeric composite material according to claim 7, wherein said epoxy vinylester resin has a density higher than 1 g/cc, preferably ranging between 1,1 and 1,2 g/cc and a glass transition temperature ranging between 110°C and 130°C.

9. The polymeric composite material according to any claim 1 to 8, wherein said material comprises a colouring agent or pigment.

10. The polymeric composite material according to claim 9, wherein said colouring agent or pigment is contained in a ratio between 1% and 3% by weight, preferably about 2% by weight.

11. The process for obtaining the polymeric composite material according to any claim 1 to 10, comprising the steps of:
- subjecting a mixture of epoxy vinylester resin/styrene and polyolefin in particulate form, in which said polyolefin is admixed in an amount less than 55% by weight relative to the epoxy vinylester resin, to a vacuum treatment and under stirring for more than 2 hours;
- adding, by means of mixing means (7), a colouring agent or pigment and a catalyst/primer to said mixture treated under vacuum;
- injecting the thus-obtained mixture in a mould until solidification.

12. The process according to claim 11, wherein said catalyst is a peroxide and said primer is a cobalt salt, or N,N-diethylacetoacetamide.

13. The process according to claim 12, wherein said peroxide is acetyl acetone peroxide or methyl ethyl ketone peroxide.

14. The process according to claim 12, wherein said cobalt salt is Co octanoate.

15. The process according to any claim 12 to 14, wherein, when said catalyst is acetyl acetone peroxide, this is used in amounts ranging between 1% and 3%, preferably between 1,5% and 2% by weight of the resin.

16. The process according to any claim 12 to 14, wherein, when said catalyst is methyl ethyl ketone peroxide, this is used in amounts ranging between 0.5% and 5%, preferably between 1% and 4% by weight of the resin.

17. The process according to any claim 12 to 16, wherein, when said primer is a Cobalt salt, this is used in amounts ranging between 2% and 3%, for thin thickness values of the product, or between 6% and 12% by weight of the resin.

18. The process according to any claim 12 to 16, wherein, when said primer is N,N-diethylacetoacetamide, this is used in amounts ranging between 0.05% and 0.4%, preferably between 0.1% and 0.4% by weight of the resin.

19. The process according to any claim 11 to 18, wherein said colouring agent or pigment is used in amounts ranging between 1% and 3% by weight, preferably about 2% by weight.

20. The polymeric composite material according to any claim 1 to 10, which can be obtained with the process according to any claim 11 to 19.

21. A product made with the polymeric composite material according to any claim 1 to 10 or claim 20, said product being preferably a kitchen or laboratory worktop, a speaker, a heat-insulating panel or furniture element, or parts thereof.

## Patentansprüche

1. Polymerverbundmaterial, das ein Epoxyvinylesterharz, in dem ein Füllstoff dispergiert ist, umfasst, wobei der Füllstoff ein Polyolefin in Teilchenform ist, wobei das Polyolefin in einer Menge von weniger als 55 Gew.-%, bezogen auf das Epoxyvinylesterharz, eingemischt ist.

2. Polymerverbundmaterial nach Anspruch 1, wobei das Polyolefin in einer Menge im Bereich zwischen 35 und 50 Gew.-%, vorzugsweise etwa 40 Gew.-%, bezogen auf das Epoxyvinylesterharz, eingemischt ist.

3. Polymerverbundmaterial nach Anspruch 1 oder 2, wobei das Polyolefin in einer kugelförmigen Teilchenform verwendet wird.

4. Polymerverbundmaterial nach Anspruch 3, wobei das Polyolefin mikronisiert ist und eine Korngröße im Bereich zwischen 20 µm und 50 µm aufweist.

5. Polymerverbundmaterial nach Anspruch 4, wobei das Polyolefin eine Korngröße im Bereich zwischen 22 µm und 30 µm aufweist.

6. Polymerverbundmaterial nach einem der Ansprüche 1 bis 5, wobei das Polyolefin aus Polypropylen und Polyethylen ausgewählt ist, vorzugsweise Polyethylen ist.

7. Polymerverbundmaterial nach einem der Ansprüche 1 bis 6, wobei das Epoxyvinylesterharz auf einem Epoxyharz von Bisphenol A, das mit Styrol mit einem Styrol-Prozentanteil zwischen 30 und 50 Gew.-%, vorzugsweise zwischen 35 und 45 Gew.-% vernetzt ist, basiert.

8. Polymerverbundmaterial nach Anspruch 7, wobei das Epoxyvinylesterharz eine Dichte von höher als 1 g/cm³, vorzugsweise im Bereich zwischen 1,1 und 1,2 g/cm³ und eine Glasumwandlungstemperatur im Bereich zwischen 110 °C und 130 °C aufweist.

9. Polymerverbundmaterial nach einem der Ansprüche 1 bis 8, wobei das Material ein Farbmittel oder Pigment umfasst.

10. Polymerverbundmaterial nach Anspruch 9, wobei das Farbmittel oder Pigment in einem Anteil zwischen 1 und 3 Gew.-%, vorzugsweise etwa 2 Gew.-% enthalten ist.

11. Verfahren zur Gewinnung des Polymerverbundmaterials nach einem der Ansprüche 1 bis 10, das die folgenden Stufen umfasst:
- Durchführen einer Vakuumbehandlung an einem Gemisch aus Epoxyvinylesterharz/Styrol und Polyolefin in Teilchenform, wobei das Polyolefin in einer Menge von weniger als 55 Gew.-%, bezogen auf das Epoxyvinylesterharz, zugemischt ist, und unter Rühren über mehr als 2 Stunden;
- Hinzufügen eines Farbmittels oder Pigments und eines Katalysators/Primers zu dem unter Vakuum behandelten Gemisch mittels eines Mischmittels (7);
- Spritzgießen des auf diese Weise erhaltenen Gemischs in ein Formwerkzeug bis zur Verfestigung.

12. Verfahren nach Anspruch 11, wobei der Katalysator ein Peroxid ist und der Primer ein Cobaltsalz oder N,N-Diethylacetoacetamid ist.

13. Verfahren nach Anspruch 12, wobei das Peroxid Acetylacetonperoxid oder Methylethylketonperoxid ist.

14. Verfahren nach Anspruch 12, wobei das Cobaltsalz Co-Octanoat ist.

15. Verfahren nach einem der Ansprüche 12 bis 14, wobei, wenn der Katalysator Acetylacetonperoxid ist, dieses in Mengen im Bereich zwischen 1 % und 3 %, vorzugsweise zwischen 1,5 % und 2 %, bezogen auf das Gewicht des Harzes, verwendet wird.

16. Verfahren nach einem der Ansprüche 12 bis 14, wobei, wenn der Katalysator Methylethylketonperoxid ist, dieses in Mengen im Bereich zwischen 0,5 % und 5 %, vorzugsweise zwischen 1 % und 4 %, bezogen auf das Gewicht des Harzes, verwendet wird.

17. Verfahren nach einem der Ansprüche 12 bis 16, wobei, wenn der Primer ein Cobaltsalz ist, dieses in Mengen im Bereich zwischen 2 % und 3 % für dünne Dickenwerte des Produkts oder zwischen 6 % und 12 %, bezogen auf das Gewicht des Harzes, verwendet wird.

18. Verfahren nach einem der Ansprüche 12 bis 16, wobei, wenn der Primer N,N-Diethylacetoacetamid ist, dieses in Mengen im Bereich zwischen 0,05 % und 0,4 %, vorzugsweise zwischen 0,1 % und 0,4 %, bezogen auf das Gewicht des Harzes, verwendet wird.

19. Verfahren nach einem der Ansprüche 11 bis 18, wobei das Farbmittel oder Pigment in Mengen im Bereich zwischen 1 und 3 Gew.-%, vorzugsweise etwa 2 Gew.-% verwendet wird.

20. Polymerverbundmaterial nach einem der Ansprüche 1 bis 10, das mit dem Verfahren nach einem der Ansprüche 11 bis 19 gewonnen werden kann.

21. Produkt, das mit dem Polymerverbundmaterial nach einem der Ansprüche 1 bis 10 oder Anspruch 20 hergestellt wurde, wobei das Produkt vorzugsweise eine Küchen- oder Laborarbeitsplatte, ein Lautsprecher, eine Wärmeisolierplatte oder ein Möbelelement oder Teile hiervon ist.

## Revendications

1. Matériau composite polymère comprenant une résine époxy-ester vinylique dans laquelle une charge est dispersée, ladite charge étant une polyoléfine sous forme de particules, dans lequel ladite polyoléfine est mélangée en une quantité inférieure à 55 % en poids par rapport à la résine époxy-ester vinylique.

2. Matériau composite polymère suivant la revendication 1, dans lequel ladite polyoléfine est mélangée en une quantité comprise entre 35 % et 50 % en poids, de préférence d'environ 40 % en poids, par rapport à la résine époxy-ester vinylique.

3. Matériau composite polymère suivant la revendication 1 ou 2, dans lequel ladite polyoléfine est utilisée sous forme de particules sphéroïdes.

4. Matériau composite polymère suivant la revendication 3, dans lequel ladite polyoléfine est micronisée et a un diamètre de grain compris entre 20 µm et 50 µm.

5. Matériau composite polymère suivant la revendication 4, dans lequel ladite polyoléfine a un diamètre de grain compris entre 22 µm et 30 µm.

6. Matériau composite polymère suivant l'une quelconque des revendications 1 à 5, dans lequel ladite polyoléfine est choisie entre le polypropylène et le polyéthylène, le polyéthylène étant préféré.

7. Matériau composite polymère suivant l'une quelconque des revendications 1 à 6, dans lequel ladite résine époxy-ester vinylique est à base d'une résine époxy de bisphénol A réticulée avec du styrène à un pourcentage en styrène compris entre 30 % et 50 % en poids, de préférence entre 35 % et 45 % en poids.

8. Matériau composite polymère suivant la revendication 7, dans lequel ladite résine époxy-ester vinylique a une masse volumique supérieure à 1 g/cm³, de préférence comprise entre 1,1 et 1,2 g/cm³, et une température de transition vitreuse comprise entre 110°C et 130°C.

9. Matériau composite polymère suivant l'une quelconque des revendications 1 à 8, ledit matériau comprenant un agent colorant ou pigment.

10. Matériau composite polymère suivant la revendication 9, dans lequel ledit agent colorant ou pigment est présent en une proportion de 1 % à 3 % en poids, de préférence d'environ 2 % en poids.

11. Procédé pour l'obtention du matériau composite polymère suivant l'une quelconque des revendications 1 à 10, comprenant les étapes consistant à :
- soumettre un mélange de résine époxy-ester vinylique/ styrène et d'une polyoléfine sous forme de particules, dans lequel ladite polyoléfine est mélangée en une quantité inférieure à 55 % en poids par rapport à la résine époxy-ester vinylique, à un traitement sous vide, sous agitation, pendant plus de 2 heures ;
- ajouter, en utilisant un moyen de mélange (7), un agent colorant ou pigment et un catalyseur/apprêt audit mélange traité sous vide ;
- injecter le mélange ainsi obtenu dans un moule jusqu'à sa solidification.

12. Procédé suivant la revendication 11, dans lequel ledit catalyseur est un peroxyde et ledit apprêt est un sel de cobalt, ou le N,N-diéthylacétoacétamide.

13. Procédé suivant la revendication 12, dans lequel ledit peroxyde est le peroxyde d'acétylacétone ou le peroxyde de méthyléthylcétone.

14. Procédé suivant la revendication 12, dans lequel ledit sel de cobalt est l'octanoate de Co.

15. Procédé suivant l'une quelconque des revendications 12 à 14, dans lequel, lorsque ledit catalyseur est le peroxyde d'acétylacétone, celui-ci est utilisé en des quantités comprises entre 1 % et 3 %, de préférence entre 1,5 % et 2 % en poids de la résine.

16. Procédé suivant l'une quelconque des revendications 12 à 14, dans lequel, lorsque ledit catalyseur est le peroxyde de méthyléthylcétone, celui-ci est utilisé en des quantités comprises entre 0,5 % et 5 %, de préférence entre 1 % et 4 % en poids de la résine.

17. Procédé suivant l'une quelconque des revendications 12 à 16, dans lequel, lorsque ledit apprêt est un sel de cobalt, celui-ci est utilisé en des quantités comprises entre 2 % et 3 %, pour des valeurs de faible épaisseur du produit, ou entre 6 % et 12 % en poids de la résine.

18. Procédé suivant l'une quelconque des revendications 12 à 16, dans lequel, lorsque ledit apprêt est le N,N-diéthylacétoacétamide, celui-ci est utilisé en des quantités comprises entre 0,05 % et 0,4 %, de préférence entre 0,1 % et 0,4 % en poids de la résine.

19. Procédé suivant l'une quelconque des revendications 11 à 18, dans lequel, lorsque ledit agent colorant ou pigment est utilisé en des quantités comprises entre 1 % et 3 % en poids, de préférence d'environ 2 % en poids.

20. Matériau composite polymère suivant l'une quelconque des revendications 1 à 10, qui peut être obtenu par le procédé suivant l'une quelconque des revendications 11 à 19.

21. Produit préparé avec le matériau composite polymère suivant l'une quelconque des revendications 1 à 10 ou la revendication 20, ledit produit étant de préférence un plan de travail de cuisine ou de laboratoire, un haut-parleur, un panneau d'isolation thermique ou un élément de meuble, ou bien leurs pièces.
